# EUROPEAN PATENT APPLICATION

(11) **EP 4 704 202 A1**
(43) Date of publication of application: **04.03.2026**
(21) Application number: 25198504.0
(22) Date of filing: 27.08.2025
(51) Int. Cl.: H01M 10/052, H01M 50/50, H01M 50/531

(54) **ELECTRODE FOR RECHARGEABLE LITHIUM BATTERY AND RECHARGEABLE LITHIUM BATTERY INCLUDING THE SAME**

(30) Priority: 28.08.2024 KR 20240116165; 26.08.2025 KR 20250119525
(71) Applicant: SAMSUNG SDI CO., LTD., Yongin-si, Gyeonggi-do 17084 (KR)
(72) Inventor: LEE, Junghyun, 17084 Yongin-si (KR); PARK, Jeongyi, 17084 Yongin-si (KR); PARK, Hyemin, 17084 Yongin-si (KR); LEE, Giwook, 17084 Yongin-si (KR); JUNG, Mingyu, 17084 Yongin-si (KR)
(74) Representative: Maiwald GmbH

(57) **Abstract**

Examples of the disclosure include an electrode for a rechargeable lithium battery, and a rechargeable lithium battery including the same. In the electrode for a rechargeable lithium battery, a content of a linear binder gradually increases from the lower portion to the surface portion of an insulating layer, and a content of a dot-shaped binder gradually decreases from the lower portion to the surface portion of the insulating layer.

## Description

### BACKGROUND

### 1. Field

Electrodes for rechargeable lithium batteries, and rechargeable lithium batteries including the electrodes are disclosed.

### 2. Description of the Related Art

A rechargeable lithium battery may be recharged, and typically has three or more times as much energy density per unit weight as a conventional lead storage battery, nickel-cadmium battery, nickel hydrogen battery, nickel zinc battery, or the like. A rechargeable lithium battery may also be charged at a high rate and thus, may be commercially manufactured for a laptop, a cell phone, an electric tool, an electric bike, and the like, and improving the energy density of rechargeable lithium batteries may be advantageous.

Such a rechargeable lithium battery is manufactured by injecting an electrolyte into an electrode assembly, which includes a positive electrode including a positive electrode active material capable of intercalating/deintercalating lithium ions, and a negative electrode including a negative electrode active material capable of intercalating/deintercalating lithium ions. Additionally, the rechargeable lithium battery may further include a separator impregnated with the electrolyte between the positive electrode and the negative electrode.

The positive electrode and the negative electrode may be manufactured by forming an electrode mixture layer on a substrate, and also forming an insulation layer on a substrate tab extending from one end face of the substrate.

### SUMMARY

Some example embodiments include an electrode for a rechargeable lithium battery, wherein the adhesion between the insulation layer and the separator and the adhesion between the insulation layer and the substrate tab are enhanced.

Some example embodiments include a rechargeable lithium battery including the electrode of the example embodiment.

Some example embodiments include an electrode for a rechargeable lithium battery, wherein a content of a linear binder gradually increases from the lower portion to the surface portion of the insulation layer, and a content of a dot-shaped binder gradually decreases from the lower portion to the surface portion of the insulation layer.

Some example embodiments include a rechargeable lithium battery including a positive electrode including a positive electrode current collector; a negative electrode including a negative electrode current collector; and an electrolyte between the positive electrode and the negative electrode, wherein at least one of the positive electrode and the negative electrode includes the electrode of the example embodiment.

According to some example embodiments, an electrode can reduce or suppress the occurrence of a short and maintain the adhesion between the insulation layer and the separator even when the separator shrinks due to heat.

### BRIEF DESCRIPTION OF THE DRAWINGS

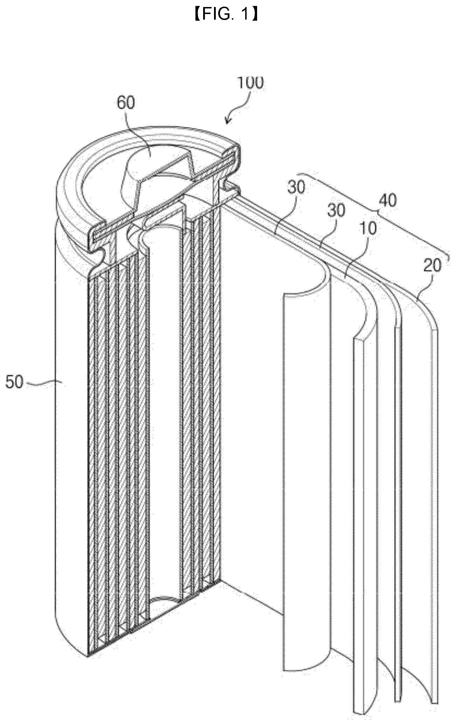

FIGS. 1 to 4 are schematic views illustrating rechargeable lithium batteries, according to some example embodiments.

### DETAILED DESCRIPTION

Hereinafter, example embodiments of the present disclosure are described in detail. However, these embodiments are examples, the present disclosure is not limited thereto and the present disclosure is defined by the scope of claims.

As included herein, when specific definition is not otherwise provided, it is understood that when an element such as a layer, film, region, or substrate is referred to as being "on" another element, it can be "directly on" the other element, or intervening elements may also be present.

As included herein, when specific definition is not otherwise provided, the singular may also include the plural. In addition, unless otherwise specified, "A or B" may indicate "including A, including B, or including A and B."

As included herein, "combination thereof" may indicate a mixture, a stack, a composite, a copolymer, an alloy, a blend, or a reaction product of constituents.

As included herein, when a definition is not otherwise provided, a particle diameter may be an average particle diameter. This average particle diameter indicates an average particle diameter (D₅₀), which is a diameter of particles with a cumulative volume of 50 volume% in the particle size distribution. The average particle diameter (D₅₀) can be measured by methods known to those skilled in the art, for example, by measuring with a particle size analyzer, a transmission electron microscope or scanning electron microscope, or a scanning electron microscope. A laser diffraction method may also be used. When measuring by laser diffraction, for example, the particles to be measured are dispersed in a dispersion medium and then introduced into a commercially available laser diffraction particle size measuring device (e.g., MT 3000 available from Microtrac, Ltd.) using ultrasonic waves at about 28 kHz, and after irradiation with an output of 60 W, the average particle diameter (D₅₀) based on 50% of the particle size distribution in the measuring device can be calculated.

As included herein, the "average particle size" of the binder indicates a volume average particle size, and refers to a Z-average particle size measured using a dynamic light scattering analysis device.

When the terms "about" or "substantially" are included in this specification in connection with a numerical value, it is intended that the associated numerical value include a tolerance of ±10% around the stated numerical value. When ranges are specified, the range includes all values therebetween such as increments of 0.1%.

### Electrode:

Some example embodiments include an electrode for a rechargeable lithium battery, wherein a content of a linear binder gradually increases from the lower portion to the surface portion of the insulation layer, and a content of a dot-shaped binder gradually decreases.

Herein, the electrode according to some example embodiments includes a current collector including a substrate and a substrate tab extending from one end face of the substrate; an electrode mixture layer on one surface or on both surfaces of the substrate; and an insulation layer on one surface or on both surfaces of the substrate tab, wherein the insulation layer includes a binder and inorganic particles, and the binder includes a linear binder and a dot-shaped binder.

According to some example embodiments, an electrode can reduce or suppress the occurrence of a short and maintain the adhesion between the insulation layer and the separator even when the separator shrinks due to heat.

Hereinafter, an electrode according to some example embodiments is described in more detail.

### Manufacturing Method

The electrode according to some example embodiments may be manufactured by forming an electrode mixture layer on a substrate and simultaneously or contemporaneously forming an insulation layer on a substrate tab extending from one end face of the substrate.

The electrode mixture layer may be formed by coating and drying an electrode active material slurry including an electrode active material and a first solvent (optionally, further including a binder and/or a conductive material), and the insulation layer may be formed by coating and drying an insulating slurry including the linear binder, the dot-shaped binder, inorganic particles, and a second solvent.

The drying process for forming the electrode mixture layer and the drying process for forming the insulation layer can be performed simultaneously or contemporaneously in one drying oven.

Herein, the cross-sectional area of the substrate may be wider than the cross-sectional area of the substrate tab. Accordingly, a difference between the amount of heat received by the electrode mixture layer on the substrate and the amount of heat received by the insulation layer on the substrate tab may be several tens of times different per unit area. As a result, the insulation layer can be maintained in a substantially rapid drying state during the drying step.

For example, in the initial dry state, the linear binder, the dot-shaped binder, and the inorganic particles within the insulation layer may be relatively uniformly mixed. Next, heating of the dryer is performed in a dry intermediate state, and as the second solvent evaporates, the linear binder may gradually move to the upper portion of the insulation layer, and the dot-shaped binder may gradually move to the lower portion of the insulation layer. As a result, as described above, a concentration gradient can be formed in which the content of the linear binder gradually increases from the lower portion to the surface portion of the insulation layer, and the content of the dot-shaped binder gradually decreases from the lower portion to the surface portion of the insulation layer.

On the other hand, when the drying process for forming the electrode mixture layer and the drying process for forming the insulation layer are performed independently or sequentially, a concentration gradient such as in the example embodiments may not be formed.

The detailed manufacturing process can be followed in the examples described below.

### Content of Components at Each Point of Insulation Layer

According to some example embodiments, the electrode has a content of the dot-shaped binder that gradually decreases from the lower portion to the surface portion of the insulation layer, but when a given amount is maintained, the adhesive strength between the insulation layer and the separator can be maintained.

Accordingly, even when the separator shrinks due to heat, the occurrence of a short can be reduced or suppressed and the adhesive strength between the insulation layer and the substrate tab is maintained.

Hereinafter, the component contents at each point of the insulation layer are as follows.

In a cross-section at a point at a depth of from about 0% to about 25% from the surface of the insulation layer, a content of the linear binder may be in a range of from about 4 wt% to about 20 wt%, and a content of the dot-shaped binder may be in a range of from about 3 wt% to about 15 wt%, based on 100 wt% of the total amount of the linear binder and the dot-shaped binder.

In a cross-section at a point at a depth of from about 50% to about 75% from the surface of the insulation layer, the content of the dot-shaped binder may be in a range of from about 3.5 wt% to about 18 wt%, and the content of the linear binder may be in a range of from about 3.5 wt% to about 17 wt%, based on 100 wt% of the total amount of the linear binder and the dot-shaped binder.

In a cross-section at a point at a depth of about 100% from the surface of the insulation layer, the content of the linear binder may be in a range of from about 3 wt% to about 13 wt%, and the content of the dot-shaped binder may be in a range of from about 4.5 wt% to about 20 wt%, based on 100 wt% of the total amount of the linear binder and the dot-shaped binder.

### Weight Ratio of Linear Binder to Dot-shaped Binder in Insulation Layer

Based on the total insulation layer, the weight ratio of the linear binder to the dot-shaped binder may be in a range of from about 1:9 to about 9:1, about 2:8 to about 8:2, or about 3:7 to about 7:3.

In this range, both the adhesive strength between the insulation layer and the separator and the adhesive strength between the insulation layer and the substrate tab can be strengthened.

### Weight Ratio of Total Binder to Inorganic Particles

Based on the total insulation layer, a weight ratio of the total binder, which includes the linear binder and the dot-shaped binder, to the inorganic particles may be in a range of from about 1:9 to about 4:6, and for example, in a range of from about 2:8 to about 4:6. Within this range, the insulation layer can secure sufficient adhesive strength from the binder while maximizing the insulating effect and thermal stability from the inorganic particles, without deteriorating the overall physical properties of the layer.

### Thickness of Insulation Layer

The thickness of the above insulation layer may be in a range of from about 10 µm to about 30 µm.

Within this range, the desired or improved insulating effect by the insulation layer can be exhibited.

### Linear Binder

The linear binder may be or include at least one of PVDF (polyvinylidene fluoride), PA (polyamide), PAA (polyacrylic acid), and a combination thereof.

For example, the linear binder may be or include PVDF (polyvinylidene fluoride).

### Dot-shaped Binder

Among the dot-shaped binders, in the case of SBR (styrene butadiene rubber) binder, the dot-shaped binder can be softened at high temperatures and the adhesive strength thereof with the separator and the substrate tab may be strengthened.

### Inorganic Particles

The inorganic particles are particles having an insulating effect and may be or include at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof.

The D₅₀ particle diameter of the inorganic particles may be in a range of from about 1 µm to about 3 µm. Within this range, the desired insulating effect of the inorganic particles can be exhibited.

### The definition of D₅₀ particle diameter is as described above.

### Rechargeable Lithium Battery:

Some example embodiments include a rechargeable lithium battery, including a positive electrode including a positive electrode current collector; a negative electrode; an electrolyte; and a separator impregnated with the electrolyte between the positive electrode and the negative electrode, wherein at least one of the positive electrode and the negative electrode includes the aforementioned electrode of some example embodiments.

By using an electrode according to some example embodiments, even when the separator shrinks due to heat, the occurrence of a short is reduced or suppressed and the adhesive strength between the insulation layer and the separator is maintained, so that a rechargeable lithium battery can be safely operated.

Hereinafter, a rechargeable lithium battery of some example embodiments is described in detail, excluding duplicate descriptions.

### Positive Electrode Active Material

The positive electrode active material may be or include a compound (lithiated intercalation compound) capable of intercalating and deintercalating lithium. For example, one or more types of composite oxides of lithium, and a metal such as or including at least one of cobalt, manganese, nickel, and combinations thereof may be included.

The composite oxide may be or include a lithium transition metal composite oxide, and examples may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any one or more of the following chemical formulas may be included. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material can achieve high capacity and can be applied to highcapacity, high-density rechargeable lithium batteries.

### Positive Electrode

The positive electrode for a rechargeable lithium battery may include a current collector, and a positive electrode active material layer on the current collector. The positive electrode active material layer may include a positive electrode active material, and may further include a binder and/or a conductive material.

For example, the positive electrode may further include an additive that can function as a sacrificial positive electrode.

A content of the positive electrode active material may be in a range of from about 90 wt% to about 99.5 wt% based on 100 wt% of the positive electrode active material layer, and each content of the binder and the conductive material may be in a range of from about 0.5 wt% to about 5 wt% based on 100 wt% of the positive electrode active material layer.

The binder improves binding properties of positive electrode active material particles with one another and with a current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be included as a conductive material unless the conductive material causes a chemical change. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x < 2), a Si-Q alloy (wherein Q is an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector and a negative electrode active material layer on the current collector. The negative electrode active material layer includes a negative electrode active material, and may further include a binder and/or a conductive material. The binder may be or include a binder of the aforementioned example embodiment.

For example, the negative electrode active material layer may include about 90 wt% to about 99 wt% of the negative electrode active material, about 0.5 wt% to about 5 wt% of the binder, and about 0.5 wt% to about 5 wt% of the conductive material.

The binder is configured to adhere the negative electrode active material particles to each other, and to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is included as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be included as a conductive material unless the electrically conductive material causes a chemical change to the battery. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent is configured as a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like, and the aprotic solvent may include at least one of nitriles such as R-CN (wherein R is a C2 to C20 linear, branched, or cyclic hydrocarbon group, a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent may be included alone or in a mixture of two or more types of solvent.

For example, when using a carbonate-based solvent, a cyclic carbonate and a chain carbonate may be mixed, and the cyclic carbonate and the chain carbonate may be mixed in a volume ratio in a range of from about 1:1 to about 1:9.

The electrolyte may further include at least one of vinylethyl carbonate, vinylene carbonate, fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₃)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), lithium difluorobis(oxalato) borate (LiDFBOB), and lithium bis(oxalato) borate (LiBOB).

### Separator

Depending on the type of the rechargeable lithium battery, a separator may be between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include at least one of a porous substrate and a coating layer including an organic material, an inorganic material, or a combination thereof on one surface, or on both surfaces, of the porous substrate.

The porous substrate may be or include a polymer film formed of or including any one polymer such as or including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked.

### Rechargeable Lithium Battery

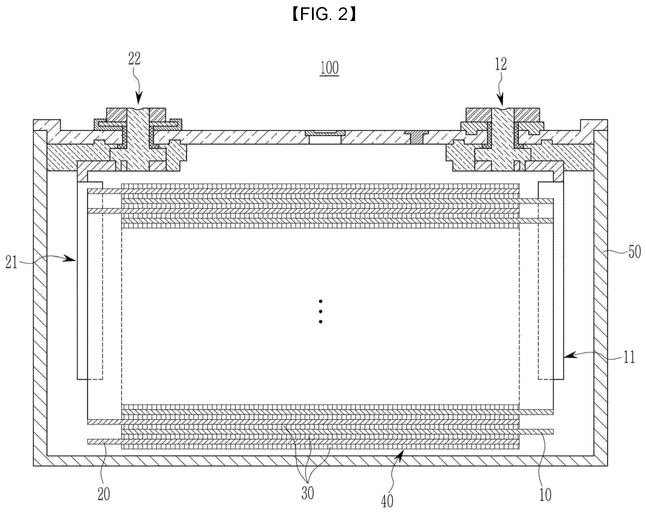

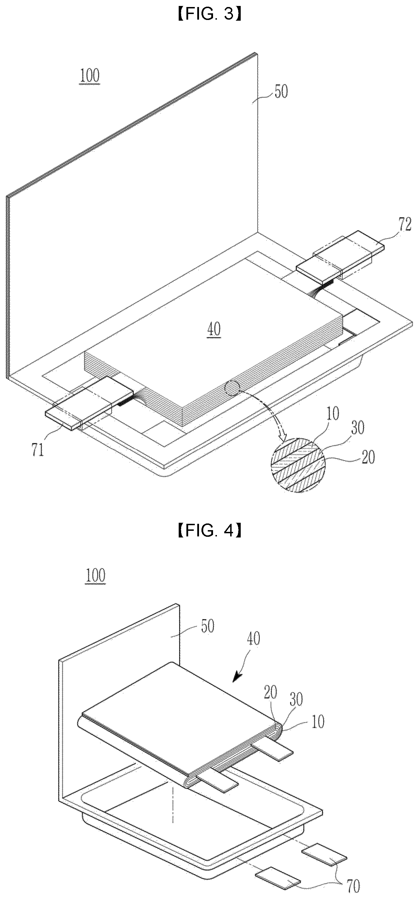

The rechargeable lithium battery may be classified into cylindrical, prismatic, pouch, or coin-type batteries, and the like depending on the shape thereof. FIGS. 1 to 4 are schematic views illustrating the rechargeable lithium battery according to some example embodiments, where FIG. 1 illustrates a cylindrical battery, FIG. 2 illustrates a prismatic battery, and FIGS. 3 and 4 illustrate a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

An aluminum current collector including a substrate and a substrate tab extending from one end of the substrate was prepared.

A positive electrode active material slurry was prepared by mixing LiNi_{0.75}Mn_{0.23}Al_{0.02}O₂ as a positive electrode active material, polyvinylidene fluoride as a binder, and acetylene black as a conductive material in a weight ratio of 96:3:1 in N-methyl pyrrolidone.

An insulation slurry was prepared by mixing PVDF as a linear binder and SBR as a dot-shaped binder in a weight ratio of 5:5, mixing this total binder (PVDF+SBR) with boehmite (D₅₀ particle diameter: 1 to 3 µm) as inorganic particles in a weight ratio of 3:7, and dispersing the obtained mixture in N-methyl pyrrolidone. The D₅₀ particle diameter was measured by using the method described above.

The positive electrode active material slurry was coated on the positive electrode current collector, and the insulation slurry was coated on the substrate tab of the positive electrode current collector, and simultaneously dried at 110 °C in a drying furnace. Subsequently, the coated substrate was pressed to manufacture a positive electrode.

### (3) Manufacturing of Negative Electrode

A negative electrode active material slurry was prepared by using artificial graphite as a negative electrode active material, mixing the negative electrode active material : a styrene-butadiene rubber binder : carboxylmethyl cellulose in a weight ratio of 97:2:1, and dispersing the mixture in distilled water.

The negative electrode active material slurry was coated on a 10 µm-thick Cu foil and then, drying it at 100 °C and pressing it to manufacture a negative electrode.

### (4) Preparation of Electrolyte Solution

An electrolyte solution was prepared by mixing 1.5 M lithium salt (LiPF₆) in a carbonate solvent including ethylene carbonate (EC): ethyl methyl carbonate (EMC): dimethyl carbonate (DMC) in a volume ratio of 20:40:40.

### (5) Manufacturing of Rechargeable Lithium Battery Cell

The manufactured positive and negative electrodes were assembled with a 25 µm thick polyethylene separator to obtain an electrode assembly, and after housing the electrode assembly in a case, the electrolyte was injected thereinto to manufacture a rechargeable lithium battery cell.

### Example 2

A positive electrode current collector, a positive electrode, and a rechargeable lithium battery cell according to Example 2 were manufactured in the same manner as in Example 1 with a difference that PVDF as a linear binder and SBR as a dot-shaped binder were mixed in a weight ratio of 2:8.

### Example 3

A positive electrode current collector, a positive electrode, and a rechargeable lithium battery cell according to Example 3 were manufactured in the same manner as in Example 1 with a difference that PVDF as a linear binder and SBR as a dot-shaped binder were mixed in a weight ratio of 4:6.

### Example 4

A positive electrode current collector, a positive electrode, and a rechargeable lithium battery cell according to Example 4 were manufactured in the same manner as in Example 1 with a difference that PVDF as a linear binder and SBR as a dot-shaped binder were mixed in a weight ratio of 6:4.

### Example 5

A positive electrode current collector, a positive electrode, and a rechargeable lithium battery cell according to Example 5 were manufactured in the same manner as in Example 1 with a difference that PVDF as a linear binder and SBR as a dot-shaped binder were mixed in a weight ratio of 8:2.

### Comparative Example 1 (Ref.)

A positive electrode and a rechargeable lithium battery cell according to Comparative Example 1 were manufactured in the same manner as in Example 1 with a difference that the insulation layer was not formed on the substrate tab.

### Comparative Example 2

A positive electrode and a rechargeable lithium battery cell according to Comparative Example 2 were manufactured in the same manner as in Example 1 with a difference that the drying process for forming the electrode mixture layer and the drying process for forming the insulation layer were sequentially performed.

For example, the positive electrode active material slurry was applied on the positive electrode current collector and dried at 110 °C in the drying furnace, and then, the insulation slurry was applied to the substrate tab of the positive electrode current collector and dried at 110 °C in the drying furnace. Subsequently, the coated substrate was pressed to manufacture the positive electrode.

### Evaluation Example 1: Distribution of Binder within Insulation Layer

Examples 1 to 5 were measured with respect to each content of SBR and PVDF based on 100 wt% of a total amount of PVDF and SBR in each cross-section at each depth point of 0% (the surface of the insulation layer), 25%, 50%, 75%, and 100% (the interface with the substrate) from the surface of the insulation layer, and the results are shown in Table 1 below.

In detail, after not etching the insulation layer (0%) or etching it (25%, 50%, 75%, 100%), each distribution of C₇H₇+ (originated from SBR) and C₃HF₄⁺ (originated from PVDF) on the surface was obtained by using a ToF-SIMS analysis equipment as each SBR and PVDF content.

**Table 1:**

| | Binder content (wt%) | Depth from the surface | | | | | Total |
|---|---|---|---|---|---|---|---|
| | | 100% | 75% | 50% | 25% | 0% | |
| Example 1 | SBR | 12.2% | 11.0% | 9.9% | 8.7% | 7.5% | 49.4% |
| | PVDF | 7.9% | 9.0% | 10.1% | 11.2% | 12.4% | 50.6% |
| | total | 20.1% | 20.1% | 20.0% | 19.9% | 19.9% | 100.0% |
| Example 2 | SBR | 19.7% | 17.8% | 15.9% | 14.0% | 12.1% | 79.6% |
| | PVDF | 3.2% | 3.6% | 4.1% | 4.5% | 5.0% | 20.4% |
| | total | 22.9% | 21.4% | 20.0% | 18.6% | 17.1% | 100.0% |
| Example 3 | SBR | 14.7% | 13.3% | 11.9% | 10.5% | 9.0% | 59.4% |
| | PVDF | 6.3% | 7.2% | 8.1% | 9.0% | 9.9% | 40.6% |
| | total | 21.0% | 20.5% | 20.0% | 19.5% | 19.0% | 100.0% |
| Example 4 | SBR | 9.8% | 8.8% | 7.9% | 6.9% | 6.0% | 39.4% |
| | PVDF | 9.5% | 10.8% | 12.1% | 13.5% | 14.8% | 60.6% |
| | total | 19.2% | 19.6% | 20.0% | 20.4% | 20.8% | 100.0% |
| Example 5 | SBR | 4.9% | 4.4% | 3.9% | 3.5% | 3.0% | 19.6% |
| | PVDF | 12.6% | 14.3% | 16.1% | 17.8% | 19.6% | 80.4% |
| | total | 17.4% | 18.7% | 20.0% | 21.3% | 22.6% | 100.0% |

### Evaluation Example 2: Evaluation of Bonding Strength of Insulation Layer

The examples and the comparative examples were measured with respect to bonding strength of an insulation layer and a substrate; and bonding strength of the insulation layer and a separator, and the results are shown in Table 2 below.

Herein, the bonding strengths were visually evaluated by assessing a bonding degree between two different layers as follows.
Strong bonding strength (5) <------------> No bonding strength (0)

**Table 2**

| | Compar ative Example 1 | Compar ative Example 2 | Exa mple 1 | Exa mple 2 | Exa mple 3 | Exa mple 4 | Exa mple 5 |
|---|---|---|---|---|---|---|---|
| Insulation layersubstrate bonding strength | - | 0 | 5 | 5 | 5 | 4 | 3 |
| Insulation layerseparator bonding strength | 0 | 0 | 5 | 5 | 5 | 4 | 4 |

### Summary

The electrode according to some example embodiments, which was represented by Examples 1 to 5 above, even when the separator was contracted by heat, was hindered or suppressed from experiencing a short circuit, and adhesion between the insulation layer and the separator was maintained.

Among the above examples, Examples 1, 3, and 4 exhibited desired or improved uniformity of binder distribution according to a depth of the insulation layer, wherein the binder was confirmed to induce strong bonding even for the separator having a strong shrinking tendency due to softening of SBR at a high temperature.

Herein, for convenience, the electrode according to some example embodiments was manufactured as a positive electrode, but even when manufactured as a negative electrode, is expected to exhibit desired or improved performance similar to Examples 1 to 5.

Accordingly, the electrode according to some example embodiments may be applied to at least either one of the positive and negative electrodes, and thus may enable safe operation of rechargeable lithium batteries.

While this disclosure has been described in connection with what is presently considered to be practical example embodiments, it is to be understood that the disclosure is not limited to the disclosed example embodiments. On the contrary, this disclosure is intended to cover various modifications and equivalent arrangements included within the spirit and scope of the appended claims.

### Description of Symbols:

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. An electrode for a rechargeable lithium battery, the electrode comprising:
a current collector including a substrate and a substrate tab extending from one end face of the substrate;
an electrode mixture layer on one surface or on both surfaces of the substrate; and
an insulation layer on one surface or on both surfaces of the substrate tab,
wherein the insulation layer comprises a binder and inorganic particles,
the binder comprises a linear binder and a dot-shaped binder, and
from a lower portion to a surface portion of the insulation layer, a content of the linear binder gradually increases and a content of the dot-shaped binder gradually decreases.

2. The electrode as claimed in claim 1, wherein:
in a cross-section at a point at a depth of about 100% from the surface of the insulation layer,
based on 100 wt% of the total amount of the linear binder and the dot-shaped binder,
a content of the dot-shaped binder is in a range of from about 4.5 wt% to about 20 wt%, and
a content of the linear binder is in a range of from about 3 wt% to about 13 wt%.a content of the dot-shaped binder is in a range of from about 10 wt% to about 15 wt%, and
a content of the linear binder is in a range of from about 5 wt% to about 10 wt%.

3. The electrode as claimed in claim 1 or 2, wherein:
in a cross-section at a point at a depth of from about 50% to about 75% from the surface of the insulation layer,
based on 100 wt% of the total amount of the linear binder and the dot-shaped binder,
a content of the dot-shaped binder is in a range of from about 3.5 wt% to about 18 wt%, and
a content of the linear binder is in a range of from about 3.5 wt% to about 17 wt%.

4. The electrode as claimed in any one of claims 1 to 3, wherein:
in a cross-section at a point at a depth of from about 0% to about 25% from the surface of the insulation layer,
based on 100 wt% of the total amount of the linear binder and the dot-shaped binder,
a content of the dot-shaped binder is in a range of from about 3 wt% to about 15 wt%, and
a content of the linear binder is in a range of from about 4 wt% to about 20 wt%.

5. The electrode as claimed in any one of claims 1 to 4, wherein based on a total insulation layer, a weight ratio of the linear binder to the dot-shaped binder is in a range of from about 1:9 to about 9:1.

6. The electrode as claimed in any one of claims 1 to 5, wherein based on a total insulation layer, a weight ratio of the binder to the inorganic particles is in a range of from about 1:9 to about 4:6.

7. The electrode as claimed in any one of claims 1 to 6, wherein the linear binder comprises at least one of PVDF (polyvinylidene fluoride), PA (polyamide), and PAA (polyacrylic acid).

8. The electrode as claimed in any one of claims 1 to 7, wherein the dot-shaped binder comprises SBR (styrene butadiene rubber)..

9. The electrode as claimed in any one of claims 1 to 8, wherein the inorganic particles comprise at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, and boehmite.

10. The electrode as claimed in any one of claims 1 to 9, wherein a D₅₀ particle diameter of the inorganic particles is in a range of from about 1 µm to about 3 µm.

11. A rechargeable lithium battery, comprising:
a positive electrode;
a negative electrode;
an electrolyte; and
a separator impregnated with the electrolyte between the positive electrode and the negative electrode,
wherein at least one of the positive electrode and the negative electrode comprises the electrode as claimed in any one of claims 1 to 10.
